# EUROPEAN PATENT APPLICATION

(11) **EP 3 430 954 A1**
(43) Date of publication of application: **23.01.2019**
(21) Application number: 17766340.8
(22) Date of filing: 28.02.2017
(51) Int. Cl.: A47J 37/00, A21C 1/00, A21C 1/02, A47J 43/046

(54) **AUTOMATIC BREAD MAKER**

(30) Priority: 14.03.2016 JP 2016049292; 17.03.2016 JP 2016053351
(71) Applicant: Panasonic Intellectual Property Management Co., Ltd., Osaka-shi, Osaka 540-6207 (JP)
(72) Inventor: NITTA, Hiroaki, Osaka 540-6207 (JP); IDA, Kyoko, Osaka 540-6207 (JP)
(74) Representative: SSM Sandmair
(86) International application number: PCT/JP2017/007653
(87) International publication number: WO 2017/159337

(57) **Abstract**

The automatic bread maker has case 23 for accommodating bread-making material, heater 26 for heating case 23, and temperature detector 27 for detecting the temperature of case 23. The automatic bread maker further has pulverizing and mixing section 24 and controller 29. Pulverizing/mixing section 24 is disposed on bottom 37 of case 23. While rotating, it pulverizes and mixes the material in case 23. Controller 29 controls heater 26 and pulverizing and mixing section 24 according to the temperature of case 23. Controller 29 governs a pulverizing step for producing rice paste from the material and a mixing step for mixing the rice paste after the pulverizing step. In the pulverizing step, pulverizing and mixing section 24 rotates in a rotation speed range the same as that in the mixing step. The structure suppresses friction heat produced in pulverizing rice grains. This suppresses gelatinization of rice starch, providing rice paste with stable viscosity.

## Description

### TECHNICAL FIELD

The present disclosure relates to automatic bread makers that allow users to make bread easily at home.

### BACKGROUND ART

Recently, automatic bread makers have become known. For example, Patent Literature 1 discloses an automatic bread maker capable of making bread by automatically performing processes from kneading bread-making material based on the program of a microcomputer. Besides, inexpensive, user-friendly rice cookers having a bread-making function also have been known (see Patent Literature 2, for example).

An art of bread making that uses rice as the main material has been developed recently, which allows rice-flour bread to be commercially available. Rice-flour bread contains an amount of polysaccharide greater than wheat-flour bread, which provides the rice-flour bread with a moist texture and natural sweetness. Since being wheat-free, the rice-flour bread can be eaten with no worry by a person with an allergy to wheat.

With a background like that, an automatic bread maker capable of making rice-flour bread from pulverized ordinary rice has been suggested (see Patent Literature 3, for example). According to the automatic bread maker, the bread-making process-from soaking via pulverizing to kneading-can be done in a single case. This eliminates the need of an additional case for bread dough, shortening the time required for making bread.

Patent Literature 4 discloses an automatic bread maker having a structure similar to that described in Patent Literature 3. According to the bread maker, pulverizing and kneading are carried out with a single blade.

The bread making method disclosed in Patent Literature 5 optimizes shear viscosity of bread dough containing rice flour as the main material and offers a preferable rise by fermentation. The method enables bread making without wheat flour and gluten.

### Citation List

### Patent Literature

PTL 1: Japanese Unexamined Patent Application Publication No. 2002-360441
PTL 2: Japanese Unexamined Patent Application Publication No. 2008-018122
PTL 3: Japanese Unexamined Patent Application Publication No. 2010-035475
PTL 4: Japanese Unexamined Patent Application Publication No. 2012-210412
PTL 5: Japanese Unexamined Patent Application Publication No. 2003-189786

### SUMMARY OF THE INVENTION

The bread makers disclosed in Patent Literatures 1 and 2 make bread using wheat flour, not rice, as the main material.

According to the bread makers disclosed in Patent Literatures 3 and 4, a rapidly-rotating blade pulverizes grains of rice in the pulverizing step. Due to the structure, a large amount of heat is generated by friction between the blade and the grains of rice, by which unwanted gelatinization of starch occurs.

The bread making method described in Patent Literature 5 cannot provide bread made from raw grains of rice. Further, obtaining a preferable rise of bread by the method above depends largely on the combination ratio between rice flour and water and on the kinds of rice flour. From the reason, the bread making method is unsuitable for household use.

The present disclosure addresses the pending problems above and has the purpose to provide an automatic bread maker capable of preparing rice paste suitable for bread making with no use of wheat flour and gluten.

The automatic bread maker of the present disclosure has a baking case for accommodating the materials of bread, a heater for heating the baking case, and a temperature detector for detecting temperature of the baking case. The automatic bread maker further has a pulverizing and mixing section and a controller. The pulverizing and mixing section is disposed at the bottom of the baking case. While rotating, the pulverizing and mixing section pulverizes and mixes the materials of bread in the baking case. The controller controls the heater and the pulverizing and mixing section according to the temperature of the baking case.

The bread-making process of the present disclosure has a pulverizing step for making rice paste from the bread-making material and a mixing step for mixing the rice paste after the pulverizing step. The controller controls the pulverizing step and the mixing step. In the pulverizing step, the controller rotates the pulverizing and mixing section at a rotational speed range the same as that in the mixing step.

The structure of the embodiment suppresses heat generated by friction when the kneading blade pulverizes the grains of raw rice. This suppresses gelatinization of rice starch, providing the rice paste with stable viscosity.

### BRIEF DESCRIPTION OF DRAWING

FIG. 1 is a cross section view of an automatic bread maker in accordance with a first exemplary embodiment.
FIG. 2 illustrates the operating section of the automatic bread maker in accordance with the first exemplary embodiment.
FIG. 3 is a control block diagram of the automatic bread maker in accordance with the first exemplary embodiment.
FIG. 4A is a cross section view showing the essential part of the baking case and the pulverizing and mixing section of the automatic bread maker in accordance with the first exemplary embodiment.
FIG. 4B is a cross section view showing the essential part of the baking case and the pulverizing and mixing section of the automatic bread maker in accordance with the first exemplary embodiment.
FIG. 5 is a cross section view showing the state of the baking case and the kneading blade before the step of pulverizing the grains of rice of the automatic bread maker of in accordance with the first exemplary embodiment.
FIG. 6 is a cross section view showing the state of the baking case and the kneading blade in the step of pulverizing the grains of rice of the automatic bread maker in accordance with the first exemplary embodiment.
FIG. 7 is a flowchart of the making process of rice-flour bread in accordance with the first exemplary embodiment.
FIG. 8 is a flowchart of a series of bread-making steps, i.e., starch-swelling, pulverizing, mixing, resting, and baking in the making process of rice-flour bread.
FIG. 9 is a cross section view of an automatic bread maker in accordance with a second exemplary embodiment.
FIG. 10 illustrates the bread-making process of the automatic bread maker in accordance with the second exemplary embodiment.
FIG. 11A shows a relation between temperature, time, and output of the cooler in the pulverizing step in accordance with the second exemplary embodiment.
FIG. 11B shows a relation between temperature, time, and output of the cooler in the pulverizing step in accordance with the second exemplary embodiment.
FIG. 12 shows a relation between temperature, time, and output of the cooler in the pulverizing step in accordance with a third exemplary embodiment.
FIG. 13 shows a relation between temperature, time, and output of the cooler in the automatic bread maker in accordance with a fourth exemplary embodiment.
FIG. 14 shows the bread making process of the automatic bread maker in accordance with the forth exemplary embodiment.

### DESCRIPTION OF EMBODIMENT

The automatic bread maker of the first exemplary embodiment of the present disclosure has a baking case for accommodating materials of bread making, a heater for heating the baking case, and a temperature detector for detecting the temperature of the baking case. The automatic bread maker further has a pulverizing and mixing section and a controller. The pulverizing and mixing section is disposed on the bottom of the baking case. While rotating, the pulverizing and mixing section pulverizes and mixes the materials of bread in the baking case. The controller controls the heater and the pulverizing and mixing section according to the temperature of the baking case.

The bread-making process of the present disclosure has a pulverizing step for making rice paste from the bread-making material and a mixing step for mixing the rice paste after the pulverizing step. The controller controls the pulverizing step and the mixing step. In the pulverizing step, the controller rotates the pulverizing and mixing section at a rotational speed range the same as that in the mixing step.

The structure of an embodiment suppresses heat generated by friction when the kneading blade pulverizes the grains of raw rice. This suppresses gelatinization of rice starch, providing the rice paste with stable viscosity.

According to the structure of the automatic bread maker of the second exemplary embodiment of the present disclosure, in addition to the structure of the first exemplary embodiment, the pulverizing and mixing section has a pulverizing part for pulverizing the bread-making material and a mixing part for mixing the material. The baking case has a protruding part at the bottom. The protruding part has a plurality of protrusions formed radially from the center of the baking case. Between a top of each protrusion and the pulverizing part, a gap smaller than the minor axis of grain of rice is formed. Between the bottom and the pulverizing part, a gap greater than the minor axis of grain of rice is formed.

According to the structure of the embodiment, the material of bread can be pulverized and mixed in a single case. This eliminates the need of changing a case for pulverizing material into another one for mixing, shortening the time required for making bread.

The automatic bread maker of the third exemplary embodiment of the present disclosure, in addition to the structure of the first exemplary embodiment, further has an automatic feeder in which yeast can be preset. The controller effects control of the automatic feeder so as to feed the yeast into the baking case after the mixing step.

The structure of the embodiment prepares rice paste suitable for bread making with no use of wheat flour and gluten.

The automatic bread maker of the fourth exemplary embodiment of the present disclosure, in addition to the structure of the first exemplary embodiment, further has a cooler for cooling the bread-making material. The controller effects control of the cooler so as to work according to a temperature-rising speed of rice paste determined on the temperature detected by the temperature detector in the pulverizing step.

According to the embodiment, even when the user uses the automatic bread maker in a high-temperature environment, the bread maker offers gluten-free bread with a preferable rise having no depressed part from grains of raw rice only (that is, not including rice flour).

According to the automatic bread maker of the fifth exemplary embodiment of the present disclosure, in addition to the structure of the fourth exemplary embodiment, the controller effects control of the cooler so as to increase the output of the cooler when the temperature-rising speed goes beyond a predetermined value.

The structure of the embodiment cools rice paste properly so that the fermentation step starts at a temperature of rice paste lower than a predetermined temperature, which protects the rice paste from excessive fermentation.

According to the automatic bread maker of the sixth exemplary embodiment of the present disclosure, in addition to the structure of the fifth exemplary embodiment, the controller effects control of the cooler so as to decrease the output of the cooler and to maintain the output at a decreased level for at least a predetermined period.

The structure of the embodiment protects the rice paste from drying due to long-time cooling, allowing the rice paste to have a preferable rise in the fermentation step.

The automatic bread maker of the seventh exemplary embodiment of the present disclosure, in addition to the structure of the fourth exemplary embodiment, has a logging function that takes operation logs, so that the cooler is controlled according to the logs.

According to the embodiment, even when the user uses the automatic bread maker in a high-temperature environment, the bread maker offers gluten-free bread with a preferable rise having no depressed part from grains of raw rice only (that is, not including rice flour).

According to the automatic bread maker of the eighth exemplary embodiment of the present disclosure, in addition to the structure of the fourth exemplary embodiment, the controller shortens the time for the pulverizing step when cooling by the cooler-even if being at the maximum-output level-is unable to suppress the temperature-rising speed of the rice paste.

According to the structure of the embodiment, the fermentation step starts at a temperature of rice paste lower than a predetermined temperature, allowing the rice paste to be protected from excessive fermentation.

Hereinafter, the exemplary embodiments of the present disclosure are described with reference to the accompanying drawings.

### FIRST EXEMPLARY EMBODIMENT

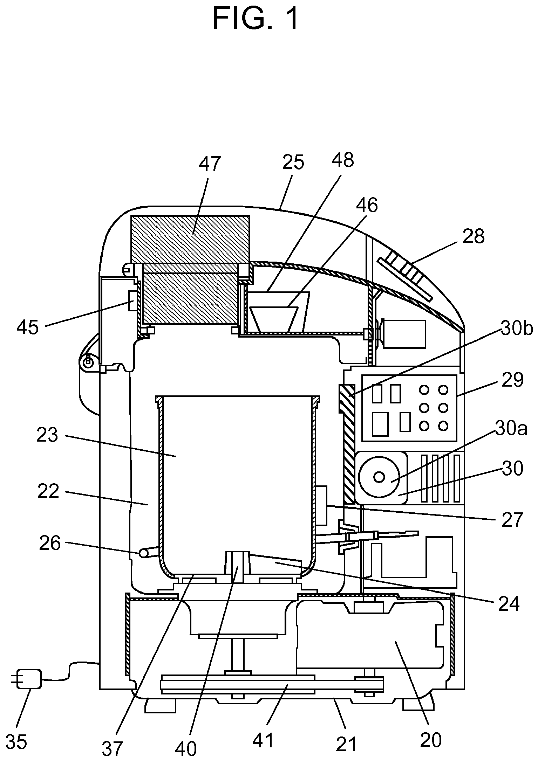

FIG. 1 is a cross section view of an automatic bread maker in accordance with the first exemplary embodiment of the present disclosure. As shown in FIG. 1, the automatic bread maker of the embodiment has baking chamber 22 disposed in main unit 21 and baking case 23 that is removably disposed in baking chamber 22 and accommodates materials for making bread.

Kneading blade 24 is disposed in baking case 23. Kneading blade 24 is connected to motor 20 via rotating shaft 40 and power-transmitting section 41. Kneading blade 24 serves as the pulverizing and mixing section for pulverizing and mixing the bread-making materials.

Cooler 30 is disposed close to baking case 23. Having cooling fan 30a and suction opening 30b, cooler 30 cools the bread-making materials in baking case 23 by discharging hot air from baking chamber 22 into the outside.

On the inner side of outer lid 25 disposed at an upper section of main unit 21, automatic feeders 46 through 48 are disposed. Automatic feeder 46 puts yeast (accommodated in the feeder in advance) into baking case 23. Automatic feeder 47 puts bread-making materials (accommodated in the feeder in advance) such as wheat flour, Joshin-ko (a kind of rice flour), and Mochi-ko (sweet rice flour), into baking case 23. Automatic feeder 48 puts a filling to be mixed into bread (accommodated in the feeder in advance) into baking case 23.

Vibrator 45 is disposed adjacent to automatic feeder 47. For smooth feeding, vibrator 45 provides bread-making materials accommodated in automatic feeder 47 with vibration to avoid lumps in the flour. Automatic feeder 47 accommodates Joshin-ko (a kind of rice flour), and Mochi-ko (sweet rice flour), for example, and puts them into the case at an appropriate time, because such a material is not suitable for being heated with the materials for making rice paste.

On the upper section of main unit 21, outer lid 25 that covers an opening and operating section 28 used for user's input operation. Heater 26 and temperature detector 27 are disposed in baking chamber 22. Heater 26 heats baking case 23. Temperature detector 27 makes contact with baking case 23 and detects the temperature of baking case 23 to indirectly detect the temperature of the bread-making materials.

Controller 29 is formed of a microcomputer and controls the automatic bread maker, which will be described later.

Controller 29 is not necessarily formed of a microcomputer; however, employing a microcomputer, since it is programmable, can easily change processing procedures, increasing degrees of freedom in designing.

To improve the processing speed, controller 29 can be formed of a logic circuit. Controller 29 may be formed of physically one device or a plurality of devices. When controller 29 is formed of a plurality of devices, each of the devices may work for different control items. In that case, the plurality of devices corresponds to a single controller.

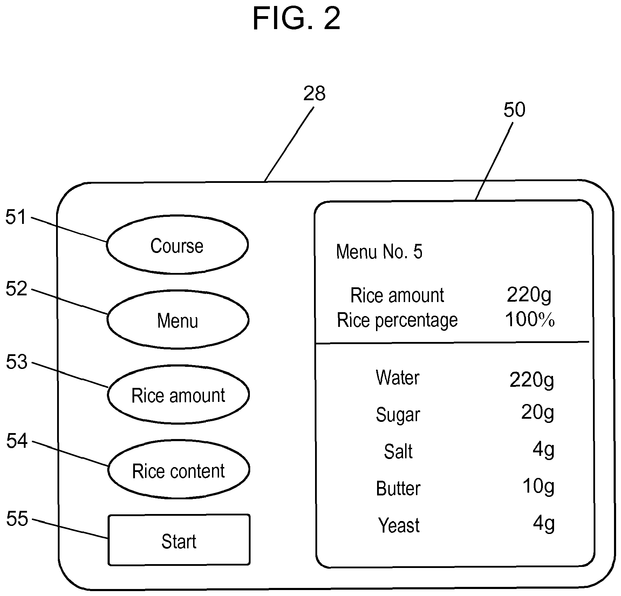

FIG. 2 illustrates operating section 28 of the automatic bread maker of the exemplary embodiment. As shown in FIG. 2, operating section 28 has display 50, setting buttons 51 through 54, and start button 55.

Display 50 displays setting items. The user uses setting button 51 to choose between the following two: one is a conventional bread making course using wheat flour (hereinafter, simply referred to a bread making course) and the other is a rice-flour bread making course in which rice paste is prepared first to make bread using it.

When the rice-flour bread making course is chosen, the user uses setting button 53 to set the amount of rice to be used. Setting button 54 enables the user to change a contained amount of rice in the bread to be baked. According to the amount of rice determined by setting button 53 and the contained amount of rice determined by setting button 54, display 50 shows an amount of bread-making material other than rice. When the user pushes start button 55, the course chosen by the user will start.

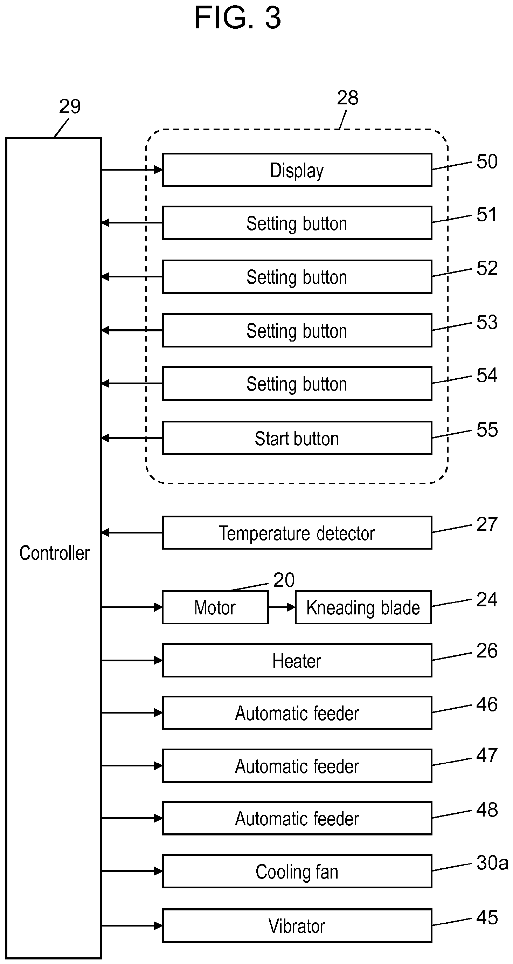

FIG. 3 is a control block diagram of the automatic bread maker of the exemplary embodiment. As shown in FIG. 3, controller 29 receives data from setting buttons 51 through 54 and start button 55. Controller 29 effects control of display 50 so as to show the setting items entered into operation section 28 by the user. Receiving data detected by temperature detector 27, controller 29 obtains the temperature of the bread-making materials.

Controller 29 controls motor 20, heater 26, automatic feeders 46 through 48, cooling fan 30a, and vibrator 45. Controller 29 controls kneading blade 24 via motor 20.

With the structure above, controller 29 governs the bread-making process from fermentation of the bread-making materials to baking, including the pulverizing step in which rice paste as the bread-making material is made from grains of raw rice and water, and the mixing step in which the rice paste is mixed well.

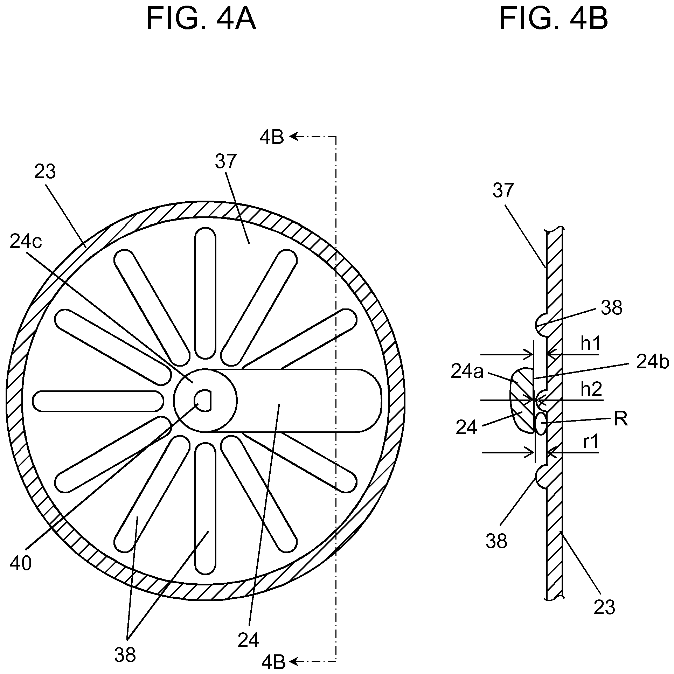

FIG. 4A is a plane section view of baking case 23 of the automatic bread maker of the exemplary embodiment. FIG. 4B is a cross section view, taken along the line 4B-4B of FIG. 4A.

As shown in FIG. 4A and FIG. 4B, baking case 23 has bottom 37 of a round shape. Rotating shaft 40 having a D-cutout part is disposed at the center of bottom 37. Kneading blade 24 has mixing part 24a, pulverizing part 24b, and boss 24c that are an integrally-formed structure. Baking case 23 is so designed that, when a predetermined amount of rice grains and water are put into the case, kneading blade 24 is immersed in the water.

Fitting boss 24c with rotating shaft 40 allows kneading blade 24 to be disposed so as to extend from rotating shaft 40 to the radial direction of bottom 37. Motor 20 rotates kneading blade 24 via power-transmitting section 41 and rotating shaft 40.

Mixing part 24a has a streamline cross-section, like a wing, seen in the rotating direction of kneading blade 24. Mixing part 24a mixes the bread-making materials. The bottom of kneading blade 24 forms pulverizing part 24b for pulverizing the bread-making materials. Bottom 37 has protruding section 38 formed of a plurality of protrusions each of which extends radially from a proximity area to the center toward a proximity area to the outer periphery.

Gap h1 is formed between bottom 37 and pulverizing part 24b. Gap h2 is formed between protruding section 38 and pulverizing part 24b.

Generally, a grain of rice is vertically long; rice grain R has an oval cross-section at the center in the lengthwise direction of the grain. When the minor axis of the oval shape equals to minor axis r1 of rice grain R, gap h1 is determined to be greater than minor axis r1 of rice grain R, whereas gap h2 is determined to be smaller than minor axis r1 of rice grain R. With the structure above, as kneading blade 24 rotates, rice grain R is trapped into a space between kneading blade 24 and adjacent two protrusions of protruding section 38.

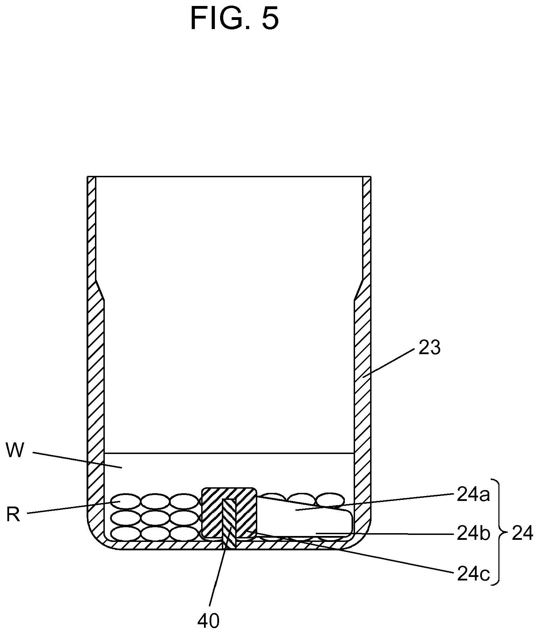

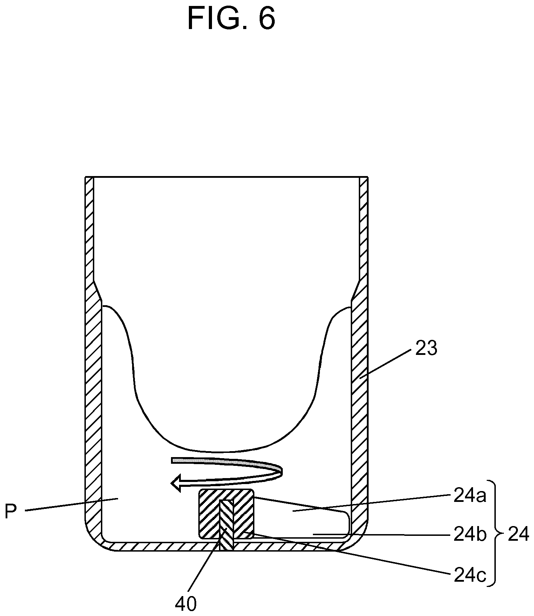

FIG. 5 and FIG. 6 are cross section views of baking case 23 and kneading blade 24 of the automatic bread maker of the embodiment; specifically, FIG. 5 shows the state before the step of pulverizing rice grains, whereas FIG. 6 shows the state during the pulverizing step.

When kneading blade 24 rotates in the state shown in FIG. 5, rice grain R enters from gap h1 one after another and they are trapped in the space between adjacent two protrusions of protruding section 38. Upon coming out of gap h2, rice grain R undergoes shear stress and compression stress produced by pulverizing part 24b and protruding section 38. The application of force pulverizes rice grain R well. Rice paste P is thus completed (see FIG. 6).

The structure allows the bread-making materials to be pulverized and mixed in a single case. This eliminates the need of changing a case for pulverizing material into another one for mixing, which shortens the time required for making bread.

Because the rice paste in its early stage has very low viscosity (almost like that of water), if a part of kneading blade 24 emerge from the rice paste, the rice paste can spill out of baking case 23. Considering above, kneading blade 24 is so designed that the whole structure of the blade is immersed in the rice paste when a predetermined amount of rice paste is set in baking case 23.

According to the rice-flour bread making course of the automatic bread maker having the aforementioned structure of the embodiment, rice paste is prepared from the grains of raw rice-with no use of wheat flour or gluten-to make bread. Hereinafter, the rice-flour bread making course will be described.

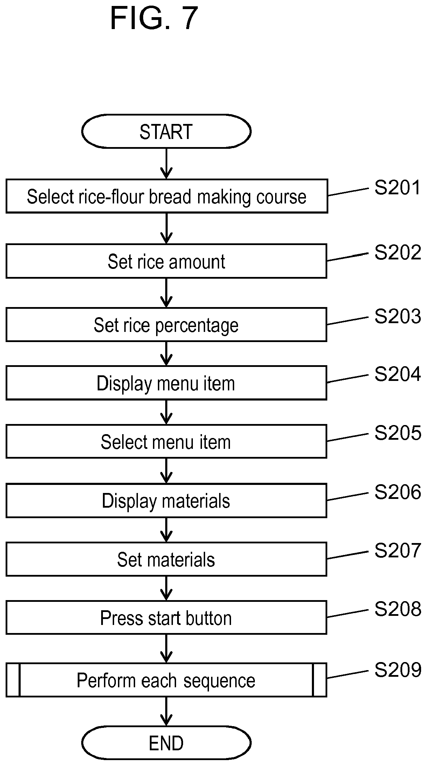

FIG. 7 is a flowchart of the rice-flour bread making course in accordance with the embodiment. As shown in FIG. 7, in step S201, the user chooses the rice-flour bread making course with use of setting button 51. Next, the user sets an amount of rice with use of setting button 53 (in step S202) and then determines a contained amount of rice in the bread with use of setting button 54 (in step S203).

In step S204, display 50 may show a menu common to the rice-flour bread making course and the bread making course (to make white bread and raisin-added bread, for example), or may show a menu unique to the rice-flour bread making course and a kind of rice. The menu unique to the rice-flour bread making course has, for example, a sweetness level and a moisture level of finished bread as a menu item. In step S205, the user selects a desired menu from the display with use of setting button 52.

In step S206, display 50 shows a necessary amount of materials according to the set contents of the user. In step S207, the user puts a predetermined amount of water and rice grains into baking case 23. At that time, the user also sets a predetermined amount of yeast into automatic feeder 46, a predetermined amount of rice flour into automatic feeder 47, and a predetermined amount of a filling (to be added into bread) into automatic feeder 48.

In step S208, the user pushes start button 55 to start the rice-flour bread making course. In step S209, receiving the temperature of bread-making materials detected by temperature detector 27, controller 29 effects control of heater 26 and kneading blade 24 so as to perform the starch-swelling step, the pulverizing step, the mixing step, the resting step, and the baking step on the basis of a predetermined sequence suitable for the set contents by the user.

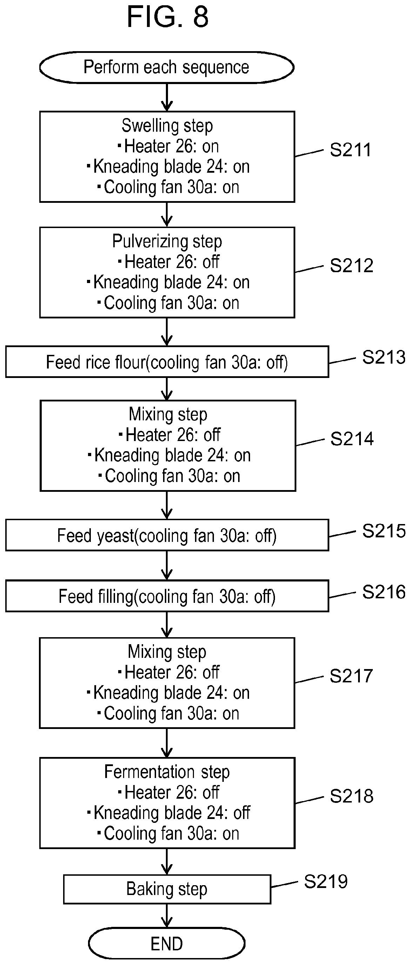

FIG. 8 is a flowchart showing the detail of a predetermined sequence carried out in step S209.

As shown in FIG. 8, for the swelling process in step S211, heater 26, kneading blade 24, and cooling fan 30a start working. In the process, the rice grains absorb water, and are heated and mixed, by which the rice sufficiently swell with no gelatinization of starch. In the swelling process, rice paste having a desired shear viscosity is prepared.

To pulverize grains of rice, a blade that rotates at a high speed more than 3000 rpm is commonly used. However, pulverizing rice grains by high-speed rotating kneading blade 24 produces a large amount of friction heat between rice grains and kneading blade 24. The friction heat causes gelatinization of starch, which makes difficult to provide rice paste with stable viscosity.

Kneading blade 24 of the embodiment rotates in a low-speed rotation range (of approximately 300 rpm) in the pulverizing step. Low-speed rotation of kneading blade 24 in rice paste produces a random flow in the rice paste, by which the shear viscosity of rice paste is efficiently controlled.

Conventionally, rice grains are pulverized by a kneading blade rotating at a high-speed and then rice paste is mixed by the kneading blade with the speed lowered. According to the structure of the embodiment, in the pulverizing step, too, kneading blade 24 is rotated at a rotation speed range the same as that in the mixing step. The rotation-speed control minimizes damage to rice starch.

Besides, the structure of the embodiment has another advantage. Compared to pulverizing at a high speed of 3000 rpm and higher, the cutting noise in the step can be decreased.

According to the structure of the embodiment, heater 26 heats up rice grains so as to encourage swelling of starch. The heating temperature is automatically set to a temperature in a range between 20°C and 65°C so as to be suitable for a selected type of rice (for example, the appropriate range for Koshihikari is from 25°C to 45°C).

Shear resistance of the rice paste is obtained by detecting resistance force on rotating kneading blade 24 from a current value of motor 20. Shear viscosity of the rice paste is small in the early stage where starch of rice is not yet swelled, but it becomes large as the paste is heated and mixed. To obtain an appropriate shear viscosity, motor 20, heater 26, and cooling fan 30a work according to a detected shear resistance.

Rotating kneading blade 24 facilitates swelling of starch, increasing shear viscosity of rice paste. Heater 26 controls the temperature of the rice paste at which a starch-degrading enzyme actively works.

Cooling fan 30a discharges hot air containing steam from baking chamber 22 to the outside of main unit 21, by which rice paste is cooled down, and at the same time, fluid in the rice paste decreases; accordingly, shear viscosity of the rice paste increases.

On completion of the starch-swelling step, the pulverizing step starts. In step S212, heater 26 turns off, but kneading blade 24 and cooling fan 30 keep working for pulverizing rice grains.

In step S213, automatic feeder 47 puts rice flour into the chamber. Prior to the rice-flour feeding, cooling fan 30a turns off to prevent rice flour from getting into suction opening 30b.

In step S214, kneading blade 24 and cooling fan 30a work for the mixing step in which the rice flour is mixed with the rice paste.

In step S215, automatic feeder 46 puts yeast into the baking chamber. At the time, prior to the yeast feeding, cooling fan 30a turns off to prevent yeast from getting into suction opening 30b. In step S216, automatic feeder 48 puts a filling to be added, for example, raisin into the chamber. Prior to the feeding, cooling fan 30a turns off to prevent the filling from getting into suction opening 30b.

Like step S214, step S217 is for mixing the material. Step S218 is the fermentation step in which the mixture of rice paste and rice flour is rested to have fermentation. In the step, heater 26 and kneading blade 24 are turned off, cooler 30 turns on. Step S219 is the baking step.

The bread made by the rice-flour bread making course of the embodiment has a further preferable rise and is softer, chewyer, and sweeter than the bread made by the ordinary bread making course.

The reasons will be described below. Mixing well-swelled starch with protein forms the base of bread dough with a preferable stretch and strength. When yeast is added to the bread dough, the yeast enters between the starch and the protein, forming air bubbles of a carbon dioxide gas produced by fermentation. As a result, the bread dough has a sufficient rise.

A gluconeogenic enzyme, which is contained in rice grains, has a different temperature dependency between an outer layer section and an inner layer section of a grain of rice. A gluconeogenic enzyme contained in the outer layer section-which is easily affected by ambient temperature, compared to that contained in the inner layer section-has an optimum temperature of 40°C for activation. A gluconeogenic enzyme contained in the inner layer section has an optimum temperature of 60°C.

In the rice paste preparing process, when the temperature of the rice paste is kept at 40°C (at which no gelatinization occurs in starch), amylase of rice acts on the starch to break down into sugar. This is the reason of sweetness of rice-flour bread. Besides, the sugar generated in the process contributes to keeping freshness of the bread longer.

In the conventional method in which the blade rotates at high speed with application of heat, an excessively increased viscosity of rice paste encumbers rotation of the blade. As a result, poor heating of rice paste fails in increasing sweetness of bread as intended.

According to the rice-flour bread making course of the exemplary embodiment, By virtue of the wheat-free materials, a person with an allergy to wheat can enjoy the bread. However, bread making with no use of wheat is difficult because rice flour contains much water than wheat and the rice flour contains no gluten that raises bread. According to the exemplary embodiment, the automatic bread maker performs all the bread making process, providing a finish of bread with uniformity.

According to the exemplary embodiment, kneading blade 24 mixes grains of raw rice and water in the rice-paste preparing step, which facilitates uniform water absorption of rice grains. Mixing the materials with application of heat allows the rice paste to have uniform temperature distribution.

The yeast vigorously acts for making bread rise in the temperature range between 27°C and 36°C. It stops acting at 4°C or lower, and dies at 60°C or higher. The temperature of just finished rice paste is too much higher for applying yeast.

According to the embodiment, during the process from rice-paste preparing to yeast adding, cooling fan 30a rapidly lowers down the temperature of the rice paste so as not to ruin the yeast, shortening the time required for making bread.

Compared to wheat-flour bread, rice-flour bread has a modest rise as it bakes and therefore the height of bread often does not reach the upper section of baking case 23. In the baking step, the upper part of bread is often heated insufficiently.

To address the problem, a heater may be disposed in the upper section of baking case 23 so as to heat the upper part of bread. Further, a reflection plate may be disposed in the upper section of baking case 23 so as to reflect heat of heater 26. With the structure above, even when the bread has an insufficient rise, the upper part of the bread is sufficiently heated from the side and the upper sections of baking case 23.

### SECOND EXEMPLARY EMBODIMENT

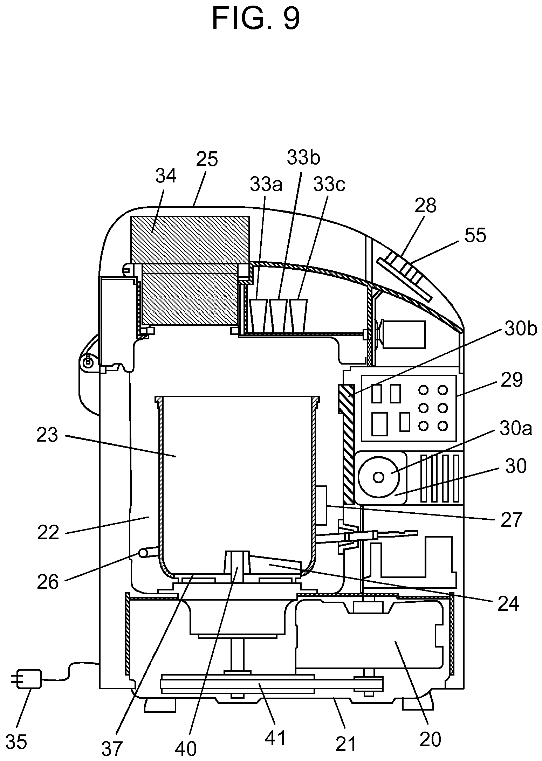

Hereinafter, the second exemplary embodiment of the present disclosure will be described. FIG. 9 is a cross section view of an automatic bread maker of the second exemplary embodiment of the present disclosure. Throughout the description of the embodiment, a part the same as that or corresponding to that in the first exemplary embodiment has a similar reference mark and description thereof will be omitted to eliminate redundancy.

The automatic bread maker of the exemplary embodiment shown in FIG. 9 has a structure that differs from the structure of the first exemplary embodiment in having automatic feeders 33a through 33c and 34, instead of automatic feeders 46 through 48.

Automatic feeders 33a through 33c, each of which accommodates a bubble-inducing material, feed them into baking case 23. The bubble-inducing material means a group of yeast, such as dry yeast, raw yeast, natural yeast, Guar Gum, Koji (malted rice), and baking powder. Automatic feeder 34 accommodates salt and sugar therein and feeds them into baking case 23. Automatic feeders 33a through 33c, and 34 are controlled by controller 29.

The workings of the automatic bread maker having the structure above is described below.

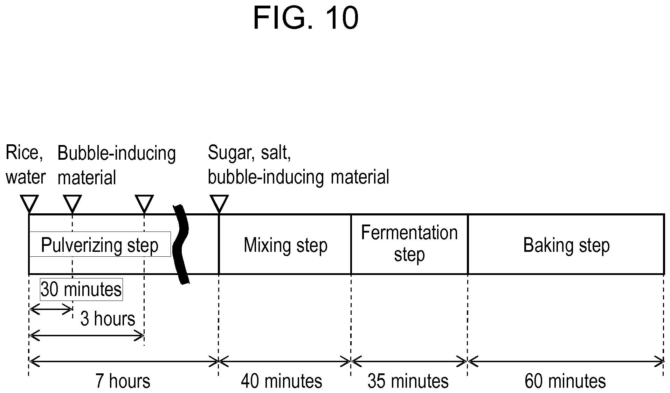

FIG. 10 illustrates the bread-making process of the automatic bread maker of the embodiment. After setting raw rice grains and water into baking case 23, the user selects the item of 'raw rice grains and water' by setting button 51. When the user pushes start button 55, the pulverizing step starts, as shown in FIG. 10. In the pulverizing step, the bread making materials in baking case 23, i.e., raw rice grains and water are pulverized by rotation of kneading blade 24 driven by motor 20.

Each of automatic feeders 33a, 33b feeds a bubble-inducing material into baking case 23 at a predetermined time. After the pulverizing step, automatic feeder 33c feeds a bubble-inducing material into baking case 23 for fermentation of rice paste.

When 30 minutes have passed since the pulverizing step started, automatic feeder 33a carries out the first-time feeding of the bubble-inducing material into baking case 23. This facilitates hydration between starch and protein in the rice paste and uniform distribution of air contained in the rice paste. This allows the materials to be fine grained dough for making gluten-free bread with a preferable rise. At that time, the bread making material is still a mixture of raw rice grains, water, and rice paste.

When three hours have passed since the start of the pulverizing step, automatic feeder 33b carries out the second-time feeding of the bubble-inducing material into baking case 23. The second-time feeding further facilitates hydration between starch and protein in the rice paste and uniform distribution of air contained in the rice paste. This allows the materials to be further fine-grained dough for providing gluten-free bread with a further preferable rise and improved eating quality.

At that time, the bread making material is still a mixture of raw rice grains, water, and rice paste, like the state just after the first-time feeding of the bubble-inducing material. However, the percentage of rice paste of the total amount after the second-time feeding becomes larger than that just after the first-time feeding.

The bread making material is continuously pulverized and mixed even after the second-time feeding of the bubble-inducing material. In seven hours since the start of the pulverizing step, rice paste is completed.

In about one hour since the start of the pulverizing step, the temperature of the bread making material increases due to friction heat generated between rice grains and bottom 37 or kneading blade 24. Occurrence of gelatinization-if only a little-can cause variation in solidness of rice grains, resulting in nonuniformly pulverized and mixed rice grains. Although depending on the type of rice, gelatinization temperature of starch is believed to be 50°C to 80°C.

To avoid gelatinization, cooler 30 starts cooling of the bread making material, while maintaining the temperature of the material in a range between 28°C and 33°C.

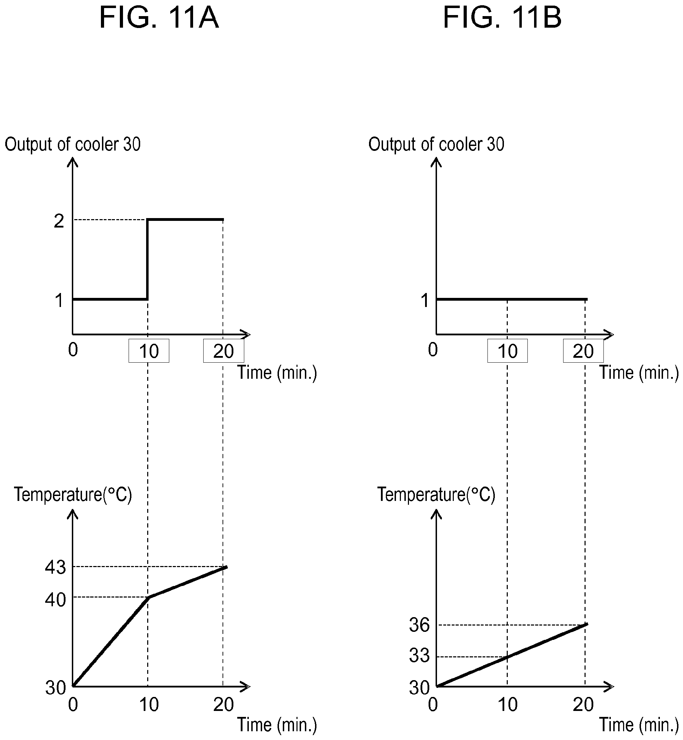

Each of FIG. 11A and FIG. 11B shows a relation between temperature, time, and output of the cooler in the pulverizing step of the embodiment. For example, suppose that the bread making material has a temperature of 30°C when application of heat starts. At that time, as shown in FIG. 11A, when the temperature of the material increases at a rate of 1°C or more per minute, cooler 30 outputs twice as much as normal.

With an increase in output of cooler 30, the bread making material has a gradual rise in temperature. In contrast, as shown in FIG. 11B, when the material has a temperature rise not less than 1°C per minute, cooler 30 keeps the output at a constant level.

When the rice paste is completed in seven hours since the start of the pulverizing step, automatic feeder 33c feeds bubble-inducing material, sugar, and salt into baking case 23. On completion of feeding by automatic feeder 33c, motor 20 changes the rotation speed of kneading blade 24, which is timed to the start of the mixing step in which the bubble-inducing material, sugar, and salt are mixed with each other.

In 40 minutes from the start of the mixing step, the mixing of the bubble-inducing material, sugar, and salt are completed. Through the step, the bread making material is formed into rice paste in which the bubble-inducing material, sugar, and salt are uniformly dispersed.

Subsequently, the fermentation step starts. Heater 26 and cooler 30 work together so that the temperature of the bread making material is maintained at the optimum range (between 38°C and 42°C) of the fermentation step.

In 35 minutes from the start of the fermentation step, the baking step starts. The temperature of baking case 23 should preferably be between 160°C and 180°C in the baking step and the baking time should preferably be around 40 minutes.

According to the embodiment, controller 29 effects control of cooler 30 so as to change the output in response to the temperature-rising speed of the bread making material in the pulverizing step. With the structure above, even when the user uses the automatic bread maker in a high-temperature environment, the bread maker offers gluten-free bread with a preferable rise having no depressed part from grains of raw rice only.

If the temperature-rising speed goes beyond a predetermined value, cooler 30 increases the output to cool the rice paste. By virtue of the cooling control, the fermentation step starts at a temperature of rice paste lower than a predetermined temperature, allowing the rice paste to be protected from excessive fermentation. As a result, gluten-free bread having a preferable rise with no depressed part is obtained.

### THIRD EXEMPLARY EMBODIMENT

The structure of the third exemplary embodiment is described below. The automatic bread maker has a structure the same as that of the second exemplary embodiment.

According to the embodiment, controller 29 effects control of cooler 30 so as to decrease the output after a predetermined period of time has passed since the output increased. Controller 29 has a logging function that takes logs during operation of the automatic bread maker. According to the logs, controller 29 controls cooler 30.

Hereinafter, the workings of the automatic bread maker of the embodiment will be described.

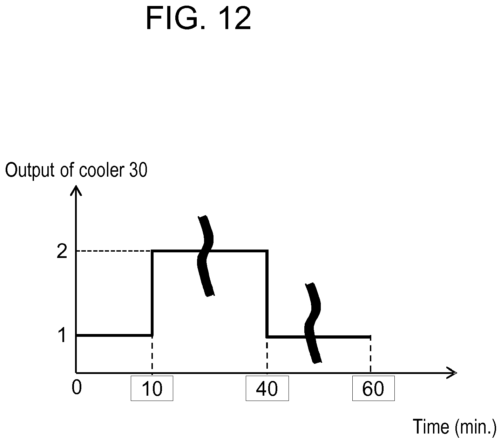

FIG. 12 shows a relation between temperature, time, and output of the cooler in the pulverizing step of the embodiment.

The structure of the embodiment has steps the same as those of the second exemplary embodiment until cooler 30 starts to work after one hour has passed since the pulverizing step started.

According to the embodiment, as shown in FIG. 12, when 30 minutes have passed since increase of output, cooler 30 decreases the output and maintains the decreased level for at least 20 minutes.

The mixing step, the fermentation step, and the baking step that follow the completion of the pulverizing step are the same as those described above.

Controller 29 logs a series of operations.

According to the embodiment, cooler 30 decreases the output when a predetermined period of time has passed since the output increased. The output control protects the rice paste from drying due to cooling for a long time, providing soft rice paste with a preferable rise in the fermentation step.

Controller 29 effects control of cooler 30 according to the logs. even when the user makes bread in a high-temperature environment, the bread maker offers gluten-free bread having a preferable rise with no depressed part from grains of raw rice only (that is, not including rice flour).

### FOURTH EXEMPLARY EMBODIMENT

The structure of the fourth exemplary embodiment is described below. The automatic bread maker has a structure the same as that of the second exemplary embodiment.

If the temperature-rising speed of the rice paste cannot be reduced by the maximum output of cooler 30, the rice paste is not cooled down sufficiently. In such a case, the structure of the embodiment shortens the period of the pulverizing step. Therefore, the fermentation step starts at a temperature of rice paste lower than a predetermined temperature, allowing the rice paste to be protected from excessive fermentation.

Hereinafter, the workings of the automatic bread maker of the embodiment will be described.

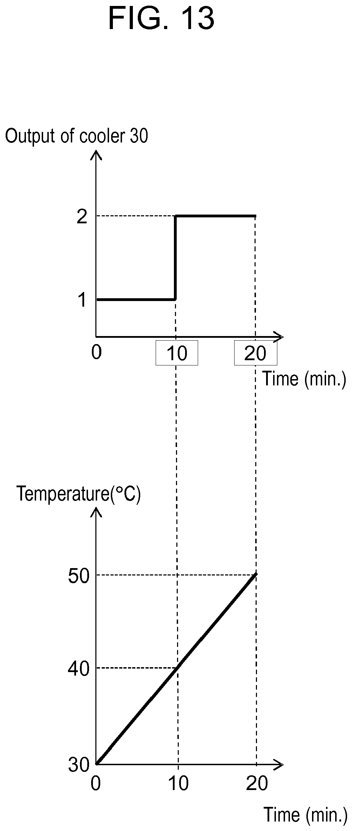

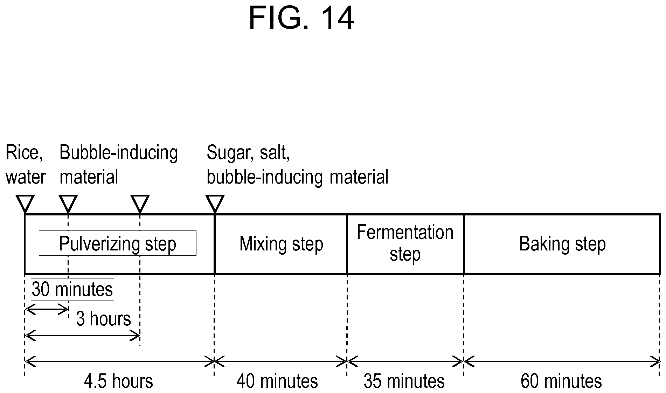

FIG. 13 shows a relation between temperature, time, and output of the cooler in the exemplary embodiment. FIG. 14 illustrates the bread making process of the automatic bread maker of the embodiment.

The structure of the embodiment has steps the same as those of the second exemplary embodiment until cooler 30 starts to work after one hour has passed since the pulverizing step started.

For example, suppose that the bread making material has a temperature of 30°C when application of heat starts. At that time, when the temperature of the material increases at a rate of 1°C or more per minute, cooler 30 outputs twice as much as normal, like in the second exemplary embodiment.

However, as shown in FIG. 13, when the user uses the automatic bread maker in a very hot environment, the temperature-rising speed of rice paste may not be suppressed by increase in output of cooler 30; accordingly, the rice paste may not be cooled sufficiently. To deal with the problem, controller 29 shortens the pulverizing step to four or five hours, as shown in FIG. 14.

The mixing step, the fermentation step, and the baking step that follow the completion of the pulverizing step are the same as those described above.

### INDUSTRIAL APPLICABILITY

As described above, the structure of the present disclosure is applicable to an automatic bread maker.

### REFERENCE MARKS IN THE DRAWINGS

- 20: motor
- 21: main unit
- 22: baking chamber
- 23: baking case
- 24: kneading blade
- 24a: mixing section
- 24b: pulverizing section
- 24c: boss
- 25: outer lid
- 26: heater
- 27: temperature detector
- 28: operating section
- 29: controller
- 30: cooler
- 30a: cooling fan
- 33a, 33b, 33c, 34, 46, 47, 48: automatic feeder
- 37: bottom
- 38: protruding section
- 40: rotating shaft
- 41: power transmitting section
- 45: vibrator
- 50: display
- 51, 52, 53, 54: setting button
- 55: start button

## Claims

1. An automatic bread maker comprising:
a baking case for accommodating bread-making material;
a heater for heating the baking case;
a temperature detector for detecting a temperature of the baking case;
a pulverizing and mixing section that is disposed at a bottom of the baking case and, while rotating, pulverizes and mixes, the bread-making material in the baking case; and
a controller that controls the heater and the pulverizing and mixing section in accordance with the temperature of the baking case,
**characterized in that** the controller governs a pulverizing step for making rice paste from the bread-making material and a mixing step for mixing the rice paste after the pulverizing step, and in the pulverizing step, the controller rotates the pulverizing and mixing section at a rotational speed range the same as a rotational speed range in the mixing step.

2. The automatic bread maker according to claim 1, wherein the pulverizing and mixing section has a pulverizing part configured to pulverize the bread-making material and a mixing part configured to mix the bread-making material, the bottom of the baking case has a protruding section formed of a plurality of protrusions each of which extends radially from a center of the bottom of the baking case, a first gap that is smaller in length than a minor axis of a rice grain is formed between the pulverizing part and a top of one of the protrusions, and a second gap that is greater in length than the minor axis of the rice grain is formed between the bottom and the pulverizing part.

3. The automatic bread maker according to claim 1 further including an automatic feeder configured to accommodate yeast, wherein the controller effects control of the automatic feeder so as to feed the yeast into the baking case after the mixing step.

4. The automatic bread maker according to claim 1 further including a cooler configured to cool the bread-making material, wherein the controller effects control of the cooler so as to work in response to a temperature-rising speed of the rice paste determined on the temperature detected by the temperature detector in the pulverizing step.

5. The automatic bread maker according to claim 4, wherein the controller effects control of the cooler so as to increase output of the cooler when the temperature-rising speed goes beyond a predetermined value.

6. The automatic bread maker according to claim 5, wherein the controller effects control of the cooler so as to decrease output of the cooler and to maintain the output at a decreased level for at least a predetermined period of time.

7. The automatic bread maker according to claim 4, wherein the controller has a logging function that takes operation logs and controls the cooler according to the logs.

8. The automatic bread maker according to claim 4, wherein the controller shortens a time for the pulverizing step when the output of the cooler at a maximum level is unable to suppress the temperature-rising speed of the rice paste.
